(19) Europäisches Patentamt
European Patent Office
Office européen des brevets

(11) **EP 2 253 372 A1**

(12) **EUROPEAN PATENT APPLICATION**
published in accordance with Art. 153(4) EPC

(43) Date of publication:
**24.11.2010 Bulletin 2010/47**

(51) Int Cl.:
**B01D 69/12** (2006.01)     **B01D 71/70** (2006.01)

(21) Application number: **09719569.7**

(22) Date of filing: **10.03.2009**

(86) International application number:
**PCT/JP2009/054549**

(87) International publication number:
**WO 2009/113541 (17.09.2009 Gazette 2009/38)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **11.03.2008   JP 2008060608**

(71) Applicant: **Toray Industries, Inc.**
**Tokyo 103-8666 (JP)**

(72) Inventors:
• **OKABE, Jun**
**Otsu-shi**
**Shiga 520-8558 (JP)**

• **TOMIOKA, Hiroki**
**Otsu-shi**
**Shiga 520-8558 (JP)**
• **HENMI, Masahiro**
**Otsu-shi**
**Shiga 520-8558 (JP)**

(74) Representative: **HOFFMANN EITLE**
**Patent- und Rechtsanwälte**
**Arabellastrasse 4**
**81925 München (DE)**

(54) **COMPOSITE SEPARATION MEMBRANE**

(57)     In order to obtain a composite separation membrane which has excellent chemical resistance, separation performance and water permeability at the same time, the present invention provides a composite separation membrane comprising a separation function layer on a porous supporting membrane, **characterized in that** the separation function layer contains at least a polymer of a polyhedral silsesquioxane represented by the following general formula (a) and a hydrophilic monomer.

$$(R^1SiO_{1.5})_n(R^2SiO_{1.5})_m \qquad \text{General Formula (a)}$$

(In the formula, $R^1$ includes a polymerizable reactive moiety; $R^2$ represents a hydrogen atom or an alkyl group, which may be substituted; and n and m each represent an integer satisfying $n \geq 2$ or $m \geq 0$, with $n + m$ being 8, 10 or 12.)

EP 2 253 372 A1

## Description

TECHNICAL FIELD

The present invention relates to a composite separation membrane which has excellent chemical resistance, separation performance, and water permeability.

BACKGROUND ART

Conventionally, separation membranes which have been used industrially include an asymmetric membrane from cellulose acetate (for example, Patent Document 1). However, this membrane has problems with hydrolysis resistance, microbial resistance, etc., and is also insufficient in salt removal rate and water permeability. Therefore, the cellulose acetate asymmetric membrane has not been put to practical use yet in a wide range of applications, while the membrane has been used for some applications.

In order to correct these defects, a composite separation membrane which has a porous membrane coated with a separation function layer which is a different material and substantially responsible for membrane separation performance has been created as a separation membrane which differs from the asymmetric membrane in terms of configuration. In the case of the composite separation membrane, it is possible to select an optimum material for each of the separation function layer and the microporous supporting membrane, and a variety of methods can also be selected for the membrane forming technique. Most of composite separation membranes which are currently commercially available have a monomer subjected to interfacial polycondensation on a porous membrane, and a polyamide is used for the separation function layer. Specific examples thereof include Patent Document 2.

These composite separation membranes provide higher desalination performance, and higher water permeability at the same time, than the cellulose acetate asymmetric membrane. However, such a composite separation membrane using a polyamide includes an amide linkage in its main chain, and thus still has insufficient chemical resistance, and it is known that the desalination performance and selective separation performance are significantly degraded due to a treatment with chlorine, hydrogen peroxide, etc., for use in sterilization of the membrane.

In that regard, for example, in Patent Document 3 and Patent Document 4, while studies are made on a separation function layer obtained by polymerizing a vinyl based compound, which has high general versatility for the membrane forming technique and has a wide range of selectivity for raw materials. However, the composite separation membrane produced with the use of a vinyl based compound as described above has excellent chemical resistance, it can hardly be said that either water permeability or separation performance is sufficient.

On the other hand, in Patent Document 5, Patent Document 6, Patent Document 7, and Non-Patent Document 1, techniques are known for forming space in a membrane containing therein a polyhedral silsesquioxane which has a three-dimensionally steric structure, and for example, Patent Document 5 discloses a multi-layer film with a polyhedral silsesquioxane containing membrane formed on a transparent base material; likewise, Patent Document 6 discloses a gas separation membrane which has a polyhedral silsesquioxane mixed with a single-layer gas separation membrane made of a resin; Patent Document 7 discloses a filtration medium which has a base material coated with a polyhedral silsesquioxane containing polymer; and Non-Patent Document 1 discloses a gas separation membrane with a polyhedral silsesquioxane introduced into polystyrene. However, the gas separation membranes described above which have significantly low water permeability are not able to be used as separation membranes for water treatments, because separation membranes for water treatments are required to satisfy all of water permeability, separation performance, and physical durability and chemical durability.

[Patent Document 1] U.S. Patent No. 3,133,132
[Patent Document 2] U.S. Patent No. 4,277,344
[Patent Document 3] Japanese Patent Application Laid-Open No. 2000-117077
[Patent Document 4] Japanese Patent Application Laid-Open No. 2004-17002
[Patent Document 5] Japanese Patent Application Laid-Open No. 2000-334881
[Patent Document 6] Japanese Patent Application Laid-Open No. 2008-530312
[Patent Document 7] Japanese Patent Application Laid-Open No. 2008-515668
[Non-Patent Document 1] H. Ríos-Dominguez, another three, "Journal of Membrane Science", 271, (2006), p. 94-100

DISCLOSURE OF THE INVENTION

Problem to be solved by the invention

Therefore, an object of the present invention is to obtain a composite separation membrane which has excellent chemical resistance and satisfies high separation performance and high water permeability.

Means for solving the problem

The present invention for solving the problem described above is achieved by the following aspects (1) to (4).

(1) A composite separation membrane having a separation function layer on a porous supporting membrane, characterized in that the separation function layer contains at least a polymer of a polyhedral silsesquioxane represented by the following general formula (a) and a hydrophilic monomer.

$$(R^1SiO_{1.5})_n(R^2SiO_{1.5})_m \qquad \text{General Formula (a)}$$

(In the formula, $R^1$ includes a polymerizable reactive moiety; $R^2$ represents a hydrogen atom or an alkyl group, which may be substituted with a substituent; and n and m each represent an integer satisfying $n \geq 2$ and $m \geq 0$, with n + m being 8, 10 or 12.)

(2) The composite separation membrane according to (1), wherein the porous supporting membrane has an average pore size of 1 to 100 nm.

(3) The composite separation membrane according to (1), wherein the separation function layer has a thickness of 500 nm or less.

(4) The composite separation membrane according to (1), wherein the hydrophilic monomer is an acid monomer.

Advantageous Effect of the Invention

According to the present invention, a composite separation membrane can be provided which has excellent chemical resistance and water permeability, and the industrial improvements of reduction in running cost, reduction in cost, and energy saving are expected through the use of this membrane.

BEST MODE FOR CARRYING OUT THE INVENTION

A composite separation membrane according to the present invention includes a separation function layer which has a fluid separation function such as desalination performance or water permeability performance and a porous supporting membrane for supporting the separation function layer.

The separation function layer is **characterized in that** it contains at least a polymer of a polyhedral silsesquioxane represented by the following general formula (a) and a hydrophilic monomer.

$$(R^1SiO_{1.5})_n(R^2SiO_{1.5})_m \qquad \text{General Formula (a)}$$

(In the formula, $R^1$ includes a polymerizable reactive moiety; $R^2$ represents a hydrogen atom or an alkyl group, which may be substituted with a substituent; and n and m each represent an integer satisfying $n \geq 2$ and $m \geq 0$, with n + m being 8, 10 or 12.)

In the polyhedral silsesquioxane for use in the present invention, the moiety represented by $R^1$ represents a reactive moiety which is polymerizable with the hydrophilic monomer. The polyhedral silsesquioxane bonded to the hydrophilic monomer with two or more ($n \geq 2$) reactive moieties interposed therebetween form a cross-linked structure, thereby resulting in improvement of the resistance to dissolution in a variety of solvents, in particular, water. In the case of a separation membrane obtained by polymerizing a hydrophilic monomer singly with a polyhedral silsesquioxane including no reactive moiety, the structure of the separation membrane is changed by swelling depending on the hydrophilicity of the hydrophilic monomer, or by elution, and there is thus concern that the membrane separation performance will be degraded. Therefore, the separation membrane composed of the polymer of the polyhedral silsesquioxane and hydrophilic monomer come to have extremely high water permeability performance with a combination of voids at the molecular level, which derives from the three-dimensionally steric structure of the polyhedral silsesquioxane, and the improvement in hydrophilicity with the hydrophilic monomer.

In the polyhedral silsesquioxane for use in the present invention, the n and m in the general formula (a) each represent an integer satisfying $n \geq 2$ and $m \geq 0$, and the n + m needs to be 8, 10 or 12. The n + m which takes the value of 8, 10 or 12 brings about sufficient homogeneity for the separation function layer and a sufficient thin film formation property for the separation function layer, and the present invention thus produces desired effects. In particular, the polyhedral silsesquioxane with n + m = 8, which is referred to as T-8 silsesquioxane, produces particularly high effects from its cubic structure in the present invention, and is thus the most preferable embodiment.

In addition, the respective values of the n and m determine the content ratio between $R^1$ and $R^2$ in the polyhedral silsesquioxane. The introduction of $R^1$ increases the composition ratio of the reactive moiety which is polymerizable with the hydrophilic monomer, whereas the introduction of $R^2$ increases the composition ratio of the nonpolymerizable moiety.

Thus, the values of n and m can be appropriately determined depending on desired performance to be obtained, as long as the n and m satisfy the requirements mentioned above.

Examples of $R^1$ include, but not limited to, a vinyl group, a vinyl halide group, a vinyl ester group, other vinyl derivatives, an acrylic group, a methacrylic group, and other acrylic derivatives. In addition, among these, compounds containing an acrylic group, a methacrylic group, or other acrylic derivative are preferable as $R^1$ in terms of polymerization reactivity, and compounds containing a methacrylic group which is poorly hydrolyzed are particularly preferable in terms of the chemical durability of the membrane.

The alkyl group represented by $R^2$ may be a straight-chain alkyl group or a branched-chain alkyl group, and may be substituted with a substituent. Specifically, examples of $R^2$ include a hydrogen atom, a methyl group, an ethyl group, a cyclopentyl group, a cyclohexyl group, an isopropyl group, a 2-ethylhexyl group, a 2-chloroethyl group, a methacryloxypropyl group, an allyl group, a 3-aminopropyl group, a 3-mercaptopropyl group, a 3-glycidoxy propyl group, and a phenyl group.

The polyhedral silsesquioxane for use in the present invention may be an article on the market or can be produced in accordance with a known synthesis method. For example, a silsesquioxane containing a methacrylic group (n = 8 and m = 0 in the general formula (a)) is sold as "Methacryl-POSS (registered trademark)" from Sigma-Aldrich Japan. As the known synthesis method, as described in, for example, Japanese Patent Application Laid-Open No. 2004-143449, 3-methacryloxy propyl trimethoxysilane is hydrolyzed and partially condensed in the presence of an polar organic solvent and a basic catalyst, and the hydrolysis product is further condensed again in the presence of a nonpolar product and a basic catalyst, thereby allowing the polyhedral silsesquioxane to be obtained.

The hydrophilic monomer for use in the present invention needs to be a hydrophilic monomer including a reactive moiety which is able to be bonded to the polymerizable reactive moiety of the polyhedral silsesquioxane. In addition, the hydrophilic monomer needs to be a monomer containing a hetero atom in order to increase the selective water permeability when the composite separation membrane is used for separation of a solution or the like. This hydrophilic monomer may be a compound of a straight-chain monomer containing a hetero atom or a compound which has a hetero ring structure. These hydrophilic monomers may be used singly, or multiple types of the hydrophilic monomers can be used in combination.

The hetero atom herein means atoms other than carbon and hydrogen atoms, such as an oxygen atom, a nitrogen atom, a sulfur atom, and a phosphorous atom. Among these hetero atoms, hydrophilic monomers containing at least one selected from the group consisting of an oxygen atom, a nitrogen atom, and a sulfur atom are preferable because the effect described above is extensively produced. In addition, functional groups containing an atom as mentioned above and highly hydrophilic functional groups include an alkoxyl group, a carboxyl group, a carbonyl group, a keto group, an ester group, a carbonate group, an amide group, a sulfone amide group, a cyano group, a formyl group, a hydroxyl group, a mercapto group, an amino group, an imino group, an alkylthio group, a sulfinyl group, a sulfonyl group, a sulfo group, a nitro group, a nitroso group, an ether group, a thioether group, and a phosphoester group.

Above all, when the long-term stability of the composite separation membrane is considered in terms of resistance to fouling, the hydrophilic functional group preferably contains an acid group containing monomer which is an acid group. These acid group containing monomers are also referred to as acid monomers hereinafter. Preferable acid groups are a carboxyl group and a sulfo group, and these groups may have an acid form, an ester for, or a salt form. These monomers can contain two or more acid groups, and monomers containing one to two acid groups are preferable.

Preferable monomers containing a carboxyl group includes, for example, a maleic acid, an acrylic acid, a methacrylic acid, a 2-(hydroxymethyl)acrylic acid, and a 4-vinylbenzoic acid.

Preferable monomers containing a sulfo group include, for example, a vinyl sulfonic acid, a styrenesulfonic acid, or 3-(methacrylamide)propyl sulfonic acid.

As a method for the polymerization of the polyhedral silsesquioxane and the hydrophilic monomer, the polymerization can be carried out by a heat treatment, electromagnetic wave irradiation, electron beam irradiation, exposure to radiation, and plasma irradiation. The electromagnetic wave herein includes infrared rays, ultraviolet rays, X ray, and $\gamma$ ray. While an optimum selection of the polymerization method may be made appropriately depending on the structure of the monomer, productivity, cost, etc., polymerization by a heat treatment and electromagnetic waves is preferable in terms of running cost, etc., and polymerization by infrared rays or ultraviolet rays is more preferable among electromagnetic waves. In the case of actually carrying out polymerization with the use of infrared rays or ultraviolet rays, these light sources do not have to selectively generate these light rays, and it is enough for the light sources to generate light easy including these electromagnetic ways. However, the strength of these electromagnetic waves is preferably higher as compared with electromagnetic waves in other wavelength range, in terms of the ability to reduce the polymerization time and control the polymerization conditions.

Further, the electromagnetic waves used for the polymerization can be generated from a halogen lamp, a xenon lamp, a UV lamp, an excimer lamp, a metal halide lamp, a rare gas fluorescent lamp, a mercury lamp, etc. While the strength of the electromagnetic waves is not particularly limited as long as the cross-linking agent and the reactive monomer can be polymerized with each other, low pressure mercury lamps and excimer lamps which are capable of short-wavelength ultraviolet irradiation with a high degree of efficiency are preferable above all because of their high thin film forming properties. The thickness and form of the polymer according to the present invention may also vary significantly depending on the respective polymerization conditions, and may vary significantly depending on the wavelength and intensity of the light, the distance to an object to be irradiated, the processing time, in the case of polymerization with electromagnetic waves. Therefore, these conductions need to be appropriately optimized.

In addition, it is preferable to add a polymerization initiator, a polymerization promoter, etc., in the formation of the separation function layer for the purposed of increasing the polymerization rate. The polymerization initiator and the polymerization promoter herein are not particularly limited, and appropriately selected depending on the structures of the polyhedral silsesquioxane and hydrophilic monomer, the polymerization approach, etc.

Examples of polymerization initiator suitable for the present invention include benzoin, benzil ketal, α-hydroxyacetophenone, α-aminoacetophenone and derivatives thereof, and mixture thereof. Azo compounds (for example, 2,2'-azobis(isobutyronitrile) (AIBN) or azobis-(4-cyanovalerianic acid)), or peroxides (for example, dibenzoyl peroxide, lauroyl peroxide, tert-butyl peroctanoate, tert-butyl perbenzoate, or di-(tert-butyl)peroxide), further aromatic diazonium salts, bis-sulfonium salts, aromatic iodonium salts, potassium persulfate, ammonium persulfate, etc., are preferable as initiators for thermal curing.

As the polymerization promoter for accelerating the initiation of the polymerization, a reducing agent, a hydrogen donor such as amines, alcohols, and ethers, a sensitizing dye, etc., may be added appropriately.

The separation function layer according to the present invention is **characterized in that** it includes at least a polymer of the polyhedral silsesquioxane and hydrophilic monomer. The separation function layer according to the present invention may contain compositions other than the polymer to such an extent that the advantageous effect of the present invention is not impaired, and for example, a surfactant and a filler may be added.

The surfactant is not particularly limited, and selected appropriately depending on the structures of the polyhedral silsesquioxane and hydrophilic monomer, etc., for the purpose of providing desired wettability.

The filler is not particularly limited, and may appropriately contain metal nanoparticles, organic nanoparticles, for the purpose of improving the mechanical strength of the composite separation membrane.

In order to control the thickness of the separation function layer according to the present invention, it is preferable to add a solvent in the polymerization of the polyhedral silsesquioxane and hydrophilic monomer. The solvent herein is not particularly limited as long as the solvent can dilute the mixture of the polyhedral silsesquioxane and hydrophilic monomer. Example of the solvent include, but not particularly limited to, water, alcohols, ketones, esters, aliphatic hydrocarbons, halogenated hydrocarbons, and other common organic solvents. In addition, when the monomer is a salt of an acid monomer, solvents may be mixed and used, such as the addition of water for the purpose of increase in solubility. However, since the porous supporting membrane is attacked by the solvent in some cases depending on the type of the porous supporting membrane, it is necessary to select a solvent which does not attack the porous supporting membrane.

In the polymer of the polyhedral silsesquioxane and hydrophilic monomer constituting the separation function layer, the content of the hydrophilic monomer in the mixture before the polymerization is preferably 10 to 99 weight% typically, depending on the hydrophilicity of the hydrophilic monomer. The content of the hydrophilic monomer controlled within this range can achieve desirable water permeability, separation performance, and physical and chemical durability. On the other hand, when the content of the hydrophilic monomer is too low, the degree of cross linkage of the separation function layer is increased to densify the separation function layer, thereby easily resulting in a decrease in the amount of a permeated substance. When the content is too high, the separation function layer is at risk of swelling or dissolving more with the solute to result in the inability to function as a separation function layer.

The separation function layer is preferably provided on at least one side of the porous supporting membrane. While a plurality of separation function layers may be provided, one separation function layer on one side is normally sufficient. The thickness of the separation function layer is preferably 10 nm or more and 500 nm or less typically, also depending on the pressure applied in use. The thickness of the separation function layer controlled within this range can achieve desirable water permeability, separation performance, and physical and chemical durability. On the other hand, when the separation function layer is less than 10 nm, the mechanical strength will be decreased to give rise to the possibility of decrease in durability and occurrence of defects. On the contrary, when the separation function layer exceeds 500 nm, the permeability rate of the permeated substance will be slowed down. The thickness of the separation function layer can be measured by analyzing a scanning electron micrograph or a transmission electron microscope. As the method for measuring the film thickness of the separation function layer, there is the following method, for example. The composite separation membrane with the base material peeled therefrom is cut in accordance with a freeze-fracture method to obtain a sample for cross section observation. This sample can be coated with thin platinum or platinum-palladium or ruthenium tetroxide for observation at an accelerating voltage of 3 to 6 kV under a scanning electron microscope (FE-SEM). The film thickness is determined from the obtained electron micrograph on the basis of the observation magnification. The value of the film thickness of the separation function layer in the present invention means the average value of measurements at 10 or more points.

The porous supporting membrane according to the present invention is used as a supporting membrane for the separation function layer in order to provide strength to the composite separation membrane according to the present invention. Therefore, while the porous supporting membrane is not particularly limited as long as the membrane has multiple pores, the membrane preferably has substantially uniform pores or pores with their pore sizes gradually increased from one side toward the other, and preferably has a structure in which the surface on either side has a pore size of 100 nm or less. Furthermore, the average pore size more preferably falls within the range of 1 to 100 nm. The average pore size of the porous supporting membrane controlled with in this range can achieve desirable water permeability, separation performance, and physical and chemical durability. On the other hand, when the average pore size falls below 1 nm, the permeation flux tends to decrease. When the average pore size exceeds 100 nm, the strength of the porous supporting membrane is likely to be decreased.

The average pore size can be obtained by, for example, observing a surface layer of the porous supporting membrane at 60,000-fold magnification under a FE-SEM. More specifically, an image shot under a FE-SEM is binarized to carry out an image analysis and obtain the area of a pore section, and the obtained area of the pore section is subjected to sphere approximation to recalculate a pore size. The pore size measurement is carried out for 1,000 or more pores, and the average pore size is determined from the respective pore sizes.

In addition, the porous supporting membrane preferably has a thickness within the range of 1 $\mu$m to 5 mm, and more preferably within the range of 10 to 100 $\mu$m. The thickness of the porous supporting membrane controlled within this range can provide desirable physical and chemical durability and handling ability. On the other hand, the thickness below 1 $\mu$m is likely to decrease the strength of the porous supporting membrane, whereas the thickness exceeding 5 mm makes it more difficult to handle the porous supporting membrane.

The membrane thickness of the porous supporting membrane herein can be obtained by averaging values measured 10 or more times on a membrane thickness measuring apparatus (for example, MITUTOYO No. 7050).

The porous supporting membrane has, as a base material, a nonwoven fabric composed of a polyester fiber or a polyamide fiber or a cloth such as a plain weave fabric, and has a porous layer formed on the base material. While the resin material used for the porous layer is not particularly limited, homopolymers or copolymers such as polysulfone, polyamide, polyester, cellulose based polymers, vinyl based polymers, polyphenylene sulfide, polyphenylene sulfide sulfone, polyphenylene sulfone, and polyphenylene oxide can be for example used singly or in combination. Among the polymers mentioned above, it is preferable to use cellulose acetate, cellulose nitrate, etc., as a cellulose based polymer, and polyethylene, polypropylene, polyvinyl chloride, polyacrylonitrile, etc., as a vinyl based polymer. Above all, homopolymers or copolymers such as polysulfone, polyamide, polyester, cellulose acetate, cellulose nitrate, polyvinyl chloride, polyacrylonitrile, polyphenylene sulfide, polyphenylene sulfide sulfone are preferable. Furthermore, among these materials, it is particularly preferable to use polysulfone which has high chemical, mechanical, and thermal stability and is easy to mold.

The porous supporting membrane as described above can be obtained by, for example, applying a dimethyl sulf oxide solution of polysulfone onto a base material such as a polyester fiber to provide a substantially uniform thickness, and immersing the base material with polysulfone applied in a water bath to remove the solvent.

The composite separation membrane according to the present invention can be formed by applying a hydrophilic monomer solution containing the polyhedral silsesquioxane, polymerization initiator, and hydrophilic monomer respectively at desirable ratios by weight onto the surface of the porous supporting membrane obtained in accordance with the method as described above, and polymerizing the hydrophilic monomer solution by electromagnetic wave irradiation.

As the means for applying the hydrophilic monomer solution, there is a variety of methods used conventionally, for example, dip coating, spin coating, spray coating, brush coating, etc.

In the present invention, in the case of the separation membrane dried in the process of polymerization by electromagnetic wave irradiation, a method may be combined for carrying out a hydrophilicity imparting treatment with a hydrophilic agent as a post-treatment. While the hydrophilic agent for use in the hydrophilicity imparting treatment is not particularly limited as long as the hydrophilic agent has wettability to both water and the separation membrane, a mixed solvent of water and alcohol is preferable in terms of safety, cost, etc.

The time period of the hydrophilicity imparting treatment is typically about 10 minutes in the case of carrying out the hydrophilicity imparting treatment at ordinary temperatures, because all that is required is that the separation membrane is permeatedwi th the hydrophilic agent. In this case, depending on the type of the membrane, the temperature of hydrophilic agent may be increased to 40°C or more in order to enhance reduction in time and the hydrophilic effect.

[Examples]

The present invention will be more specifically described below with reference to examples. However, the present invention is not to be considered limited to these examples. Special grade reagent products produced by Wako Pure Chemical Industries, Ltd. were used for the regents, unless otherwise stated.

In the following examples, the removal rate of the composite separation membrane, the permeability rate of the composite separation membrane, and the performance retention rate after immersion in chlorine are calculated respectively by the following equations (1), (2), and (3).

$$
\begin{aligned}
\text{Removal Rate (\%)} = &\{(\text{Salt Concentration of Supplied Solution} \\
&- \text{Salt Concentration of Permeated Solution}) / \text{Salt Concentration} \\
&\text{of Supplied Solution}\} \times 100 \qquad \text{Equation (1)}
\end{aligned}
$$

$$
\begin{aligned}
\text{Permeability Rate (m}^3/\text{m}^2/\text{day)} = &(\text{The Amount of Permeated Solution} \\
&\text{per Day}) / (\text{Area of Permeation Membrane}) \\
&\qquad\qquad\qquad\qquad\qquad \text{Equation (2)}
\end{aligned}
$$

$$
\begin{aligned}
\text{Performance Retention Rate after Immersion in Chlorine (\%)} = \\
(\text{Salt Removal Rate after Immersion in Chlorine}) / (\text{Salt Removal} \\
\text{Rate before Immersion in Chlorine}) \times 100 \quad \text{Equation (3)}
\end{aligned}
$$

(Reference Example 1)

The porous supporting membrane reinforced with a fiber, used in the present invention, was produced in accordance with the following approach.

Taffeta (150-denier multifilament yarn for both warp yarn and weft yarn, weaving density: 90 yarns/inch in the length direction and 67 yarns/inch, thickness: 160μm) composed of a 30 cm long × 20 cm wide polyester fiber was fixed to a glass plate, and a 15 weight% dimethylformamide solution of polysulfone (Udel (Registered Trademark) produced by Amoco, P-3500) was casted thereon at room temperature (25°C) to provide a thickness of 200 μm, immediately followed by immersion in pure water and leaving as it was for 5 minutes, thereby obtaining a porous supporting membrane. The pure water permeation coefficient of the thus obtained porous supporting membrane was 0.005 to 0.01 kg/cm$^2$/sec/atm (about 0.001 to 0.002 g/cm$^2$/sec/MPa), which was measured at a pressure of 0.1 MPa and a temperature of 25°C. In addition, the average pore size at the surface of the obtained porous supporting membrane was 20 to 50 nm, and the thickness of the polysulfone moiety thereof was 50 μm.

(Example 1)

The porous supporting membrane produced in accordance with Reference Example 1 was brought into contact with an isopropyl alcohol solution containing 3.6 weight% of sodium styrenesulfonate, 0.4 weight% of Methacryl-POSS (polyhedral oligomeric silsesquioxane), 0.24 weight% of 2,2-dimethoxy-2-phenylacetophenone as an α-hydroxyacetophenone type photopolymerization initiator, and 33. 5 weight% of pure water for 1 minute, and nitrogen was sprayed from an air nozzle to remove the extra solution from the surface of the porous supporting membrane, thereby forming a layer of the solution on the porous supporting membrane. Then, with the use of an excimer lamp (UER 20-172) produced by Ushio, inc., capable of irradiation with ultraviolet rays of 172 nm, the distance between the excimer lamp and the porous supporting membrane was set to 1 cm under a nitrogen atmosphere with an oxygen concentration of 0.1% or less, and irradiation with ultraviolet rays was carried out for 5 minutes to produce a composite separation membrane with a polymer of a polyhedral silsesquioxane and a hydrophilic monomer formed on the surface of the porous supporting membrane. Then, immersion in a 10 weight% isopropyl alcohol solution for 10 minutes was carried out for development of hydrophilicity. The thickness of the thus obtained polymer was 250 nm on average according to confirmation by UHR-FE-SEM. In addition, the thus obtained composite separation membrane was subjected to a reverse osmosis test under the conditions of 0.5 MPa and 25°C, with the use of, as raw water, a 500 ppm salt solution adjusted to pH 6,5 with hydrochloric acid or sodium hydroxide, thereby obtaining the performance shown in Table 1 as the result of the test. In addition, the thickness of the thus obtained polymer was 250 nm on average according to confirmation by UHR-FE-SEM.

(Example 2)

A composite separation membrane was produced in the same way as in Example 1, except that an isopropyl alcohol solution containing 1.8 weight% of an acrylic acid, 0.2 weight% of Methacryl-POSS, and 0.12 weight% of 2,2-dimethoxy-2-phenyl acetophenone was used instead of the solution applied onto the porous supporting membrane in Example 1. The thus obtained composite separation membrane was evaluated in the same way as in Example 1 to obtain the performance shown in Table 1.

(Comparative Example 1)

To the porous supporting membrane produced in accordance with Reference Example 1, 1.0 weight% of piperazine, 0.2 weight% of 1,3-di(4-piperidyl)propane, 0.5 weight% of sodium alkyl diphenyl ether disulfonate, and 1.0 weight% of trisodium phosphate were applied, followed by drying carried out with hot air at 70°C for 1 minute. Then, an n-decane solution containing 0.4 weight% of isophthalic chloride and 0.1 weight% of trimesic chloride was applied, followed by a treatment carried out with hot air at 100°C for 5 minutes. Then, immersion in a 100 ppm chlorine solution adjusted to pH 7 was further carried out for 2 minutes, followed by washing with pure water. The thus obtained composite separation membrane was evaluated in the same way as in Example 1 to obtain the performance shown in Table 1.

(Comparative Example 2)

A composite separation membrane was produced in the same way as in Example 1, except that the Methacryl-POSS in the solution applied onto the porous supporting membrane in Example 1 was changed to divinylbenzene. The thus obtained composite separation membrane was evaluated in the same way as in Example 1 to obtain the performance shown in Table 1.

The composite separation membranes according to Examples 1 to 2 and Comparative Examples 1 to 2 were immersed in a 500 ppm chlorine solution adjusted to pH 7 for 1 week to carry out a chemical resistant test. The results are shown in Table 1.

It is determined from Table 1 that the composite separation membranes according to the present invention have excellent chemical resistance in addition to excellent separation performance and water permeability.

[Table 1]

| | Initial Performance | | Performance Retention Rate after Immersion in Chlorine (%) |
|---|---|---|---|
| | Removal Rate (%) | Permeability Rate ($m^3/m^2$/day) | |
| Example 1 | 62.3 | 2.52 | 105 |
| Example 2 | 81.4 | 0.82 | 98 |
| Comparative Example 1 | 65.5 | 1.10 | 55 |
| Comparative Example 2 | 27.6 | 5.76 | 101 |

Claims

1. A composite separation membrane comprising a separation function layer on a porous supporting membrane, **characterized in that** the separation function layer contains at least a polymer of a polyhedral silsesquioxane represented by the following general formula (a) and a hydrophilic monomer.

$$(R^1SiO_{1.5})_n(R^2SiO_{1.5})_m \qquad \text{General Formula (a)}$$

(In the formula, $R^1$ includes a polymerizable reactive moiety; $R^2$ represents a hydrogen atom or an alkyl group, which may be substituted with a substituent; and n and m each represent an integer satisfying $n \geq 2$ and $m \geq 0$, with $n + m$ being 8, 10 or 12.)

2. The composite separation membrane according to claim 1, wherein the porous supporting membrane has an average pore size of 1 to 100 nm.

3. The composite separation membrane according to claim 1, wherein the separation function layer has a thickness of 500 nm or less.

4. The composite separation membrane according to claim 1, wherein the hydrophilic monomer is an acid monomer.

## INTERNATIONAL SEARCH REPORT

| | International application No. |
|---|---|
| | PCT/JP2009/054549 |

**A. CLASSIFICATION OF SUBJECT MATTER**
*B01D69/12*(2006.01)i, *B01D71/70*(2006.01)i

According to International Patent Classification (IPC) or to both national classification and IPC

**B. FIELDS SEARCHED**

Minimum documentation searched (classification system followed by classification symbols)
B01D53/22, 61/00-71/82, C02F1/44

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-29779 A  (Toshiba Corp.),<br>03 February, 2005 (03.02.05),<br>Claim 4; example 58<br>& US 6565763 B1 | 1-3<br>4 |
| X<br>A | JP 2000-24471 A  (Daicel Chemical Industries,<br>Ltd.),<br>25 January, 2000 (25.01.00),<br>Claims 1, 2; example 1<br>(Family: none) | 1-3<br>4 |
| A | JP 61-187904 A  (Director General, Agency of<br>Industrial Science and Technology),<br>21 August, 1986 (21.08.86),<br>Claim 1; example 1<br>(Family: none) | 1-4 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 April, 2009 (30.04.09) | 19 May, 2009 (19.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/054549 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-47247 A  (Toray Industries, Inc.),<br>22 February, 2007 (22.02.07),<br>Claims 1 to 3; Par. No. [0032]<br>(Family: none) | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3133132 A
- US 4277344 A
- JP 2000117077 A
- JP 2004017002 A
- JP 2000334881 A
- JP 2008530312 A
- JP 2008515668 A
- JP 2004143449 A

**Non-patent literature cited in the description**

- **H. Ríos-Dominguez.** *Journal of Membrane Science,* 2006, vol. 271, 94-100